# EUROPÄISCHE PATENTANMELDUNG

(11) **EP 0 625 556 A2**
(43) Veröffentlichungstag der Anmeldung: **23.11.1994**
(21) Anmeldenummer: 94107438.7
(22) Anmeldetag: 13.05.1994
(51) Int. Cl.: C09D 189/06

(54) **Verfahren zur Herstellung einer umweltfreundlichen Farbe und danach hergestellte umweltfreundliche Farbe**

(30) Priorität: 19.05.1993 DE 4316713
(71) Anmelder: Kohr, Berthold, D-54310 Ralingen (DE)
(72) Erfinder: Kohr, Berthold, D-54310 Ralingen (DE)
(74) Vertreter: Serwe, Karl-Heinz, Dipl.-Ing.

(57) **Zusammenfassung**

2.1 Holzsärge werden zur Verbesserung des Aussehens mit Farben behandelt. Da die Holzsärge bestimmungsgemäß ins Erdreich eingebracht werden, ist es notwendig, daß sie keine umweltschädlichen Stoffe enthalten.

2.2 Eine umweltfreundliche Farbe wird durch Vermischen von zwei Teilen Holzleim in sechs Teilen Wasser unter Zusatz von zehn Teilen Kreide erhalten.

## Beschreibung

Die Erfindung betrifft ein Verfahren zur Herstellung einer umweltfreundlichen Farbe und eine nach dem Verfahren hergestellte umweltfreudliche Farbe, insbesondere zum Behandeln von Holzwerkstoffen.

Holzsärge werden zur Verbesserung des Aussehens mit Farben behandelt. Da die Holzsärge bestimmungsgemäß ins Erdreich eingebracht werden, ist es notwendig, daß sie keine umweltschädlichen Stoffe enthalten.

Die Aufgabe der Erfindung besteht daher darin, eine umweltfreundliche Farbe zum Behandeln von Holzwerkstoffen vorzuschlagen, die leicht und einfach herstellbar und anwendbar ist und die keine Schäden im Erdreich hervorruft.

Diese Aufgabe wird dadurch gelöst, daß zwei Teile Holzleim in sechs Teilen Wasser unter Zusatz von zehn Teilen Kreide vermischt werden.

Vorzugsweise wird als Holzleim Knochenleim verwendet.

Vorteilhaft wird ein Knochen-Perlleim verwendet, der zunächst in die vorgegebene Wassermenge eine vorgegebene Zeit zum Quellen eingebracht wird. Vorzugsweise wird der Knochen-Perlleim ca. sechs Stunden im Wasser zum Quellen eingebracht.

Nach dem Quellen wird vorzugsweise das Wasser-Knochenleim-Gemisch erhitzt, bis der Knochenleim flüssig ist und anschließend wird die Kreide eingemischt.

Vorzugsweise stammt die Kreide aus der Champagne.

Eine umweltfreundliche Farbe, insbesondere zum Behandeln von Holzwerkstoffen, besteht nach dem Verfahen aus einem Gemisch von zwei Teilen Leim, sechs Teilen Wasser und zehn Teilen Kreide.

Vorzugsweise ist der Leim ein Knochen-Perlleim. Vorteilhaft stammt die Kreide aus der Champagne.

Vorzugsweise wird die Farbe zur Verflüssigung erhitzt.

Eine umweltfreundliche Farbe, insbesondere zum Behandeln von Holzwerkstoffen, wird dadurch hergestellt, daß zwei Teile Knochen-Perlleimmit sechs Teilen Wasser vermischt werden. Dieses Wasser-Knochen-Perlleim-Gemisch wird ca. 6 Stunden quellen gelassen. Anschließend wird dieses Gemisch vorsichtig erhitzt, bis der eingeweichte Knochen-Perlleim flüssig geworden ist und ein homogenes Gemisch durch Mischen entsteht.

Anschließend werden zehn Teile Kreide aus der Champagne hinzugefügt und sorgfältig durchgemischt.

Die so herstellte umweltfreundliche Farbe kann mit allen bekannten Abtönfarben in der gewünschten Farbe abgetönt werden.

Die Farbe wird in erhitztem, flüssigen Zustand angewendet und härtet beim Erkalten und Abtrocknen aus.

Nach dem Aushärten der Farbe ist die Farbschicht in bekannter Weise durch Schleifen od. dgl. mehr gut weiterzubearbeiten. Die Farbe ist äußerst preiswert herzustellen und enthält keinerlei schädliche Stoffe.

## Patentansprüche

1. Verfahren zur Herstellung einer umweltfreundlichen Farbe, insbesondere zum Behandeln von Holzwerkstoffen, dadurch gekennzeichnet, daß zwei Teile Holzleim in sechs Teilen Wasser unter Zusatz von zehn Teilen Kreide vermischt werden.

2. Verfahren nach Anspruch 1, dadurch gekennzeichnet, daß als Holzleim Knochenleim verwendet wird.

3. Verfahren nach Anspruch 2, dadurch gekennzeichnet, daß ein Knochen-Perlleim verwendet wird, der zunächst in die vorgegebene Wassermenge eine vorgegebene Zeit zum Quellen eingebracht wird.

4. Verfahren nach Anspruch 3, dadurch gekennzeichent, daß der Knochen-Perlleim ca. sechs Stunden in Wasser zum Quellen eingebracht wird.

5. Verfahren nach einem der Ansprüche 1 bis 4, dadurch gekennzeichnet, daß nach dem Quellen das Wasser-Knochenleim-Gemisch erhitzt wird bis der Knochenleim flüssig ist und daß anschließend die Kreide eingemischt wird.

6. Verfahren nach einem der Ansprüche 1 bis 5, dadurch gekennzeichnet, daß die Kreide aus der Champagne stammt.

7. Umweltfreundliche Farbe, insbesondere zum Behandeln von Holzwerkstoffen nach den Verfahrensansprüchen 1 bis 6, dadurch gekennzeichnet, daß die Farbe aus einem Gemisch von zwei Teilen Leim, sechs Teilen Wasser und zehn Teilen Kreide besteht.

8. Umweltfreundliche Farbe nach Anspruch 7, dadurch gekennzeichnet, daß der Leim ein Knochen-Perlleim ist.

9. Farbe nach Anspruch 7 oder 8, dadurch gekennzeichnet, daß die Kreide aus der Champagne stammt.

10. Farbe nach einem der Ansprüche 7 bis 9, dadurch gekennzeichnet, daß die Farbe zur Verflüssigung erhitzt wird.
